# EUROPEAN PATENT APPLICATION

(11) **EP 2 883 981 A1**
(43) Date of publication of application: **17.06.2015**
(21) Application number: 12882571.8
(22) Date of filing: 08.08.2012
(51) Int. Cl.: C23C 22/48, C25D 9/08

(54) **METAL SURFACE TREATMENT LIQUID, SURFACE TREATMENT METHOD FOR METAL BASES, AND METAL BASE OBTAINED BY SURFACE TREATMENT METHOD FOR METAL BASES**

(71) Applicant: Nihon Parkerizing Co., Ltd., Tokyo 103-0027 (JP)
(72) Inventor: INOUE, Shigeki, Tokyo 103-0027 (JP); TSUNEISHI, Akinobu, Tokyo 103-0027 (JP); KAWAGOSHI, Ryosuke, Tokyo 103-0027 (JP); IKURA, Yuji, Tokyo 103-0027 (JP)
(74) Representative: Hoffmann Eitle
(86) International application number: PCT/JP2012/070268
(87) International publication number: WO 2014/024282

(57) **Abstract**

Provided is a means for further increasing corrosion resistance in comparison with conventional zirconium-based chemical conversion coating films and bismuth-based chemical conversion coating films. A metal surface treatment liquid for use in forming a composite coating film containing a Bi element and a Group 4 element on a metal base, which is a fluorine-free aqueous treatment liquid obtained by adding (A) a Bi element source, (B) a multimer of at least one Group 4 element selected from the group consisting of Zr, Ti and Hf elements, and (C) one or more aminopolycarboxylic acids or salts thereof.

## Description

### Technical Field

The present invention relates to a technique for forming a chemical conversion coating film containing bismuth in a (fluorine-free) system containing no fluorine.

### Background Art

Coatings are often executed on metal materials for the purpose of providing corrosion resistance or design properties. In general, chemical conversion coating films are interposed between coating films formed by coating and metallic materials, and the chemical conversion coating films significantly improve corrosion resistance and coating film adhesion. The chemical conversion coating films are formed on metallic material surfaces by a process referred to as a metal surface treatment (including electrolytic treatment) of bringing into contact with a chemical agent referred to as a metal surface treatment liquid. As metal surface treatment for providing metallic materials with corrosion resistance and coating film adhesion, chromate treatment, zinc phosphate treatment, and zirconium-based treatment are known, for example.

Among these types of treatment, the use of the chromate treatment has been conventionally limited for environmental reasons, because hexavalent chromium is contained in the treatment liquid and chemical conversion coating film formed. In addition, while the treatment is effective for zinc-based plating materials and aluminum alloy materials, a sufficient amount of coating film is not attained for iron-based materials, and therefore it has been thus difficult to apply the treatment to structures or the like partially including iron and steel materials.

Furthermore, the zinc phosphate treatment is effective for not only zinc-based plating materials but also aluminum alloy materials, but also iron steel materials, and preferred for various types of coating, in particular, as base treatment in the case of applying cationic electrodeposition coating. However, the treatment contains phosphorus as a eutrophic element and nickel which has a possibility of carcinogenesis, and further produces, as a by-product, industrial waste referred to as sludge during the treatment, and thus have been also getting avoided for environmental reasons.

In contrast, the zirconium-based chemical conversion treatment can form required amounts of coating film on various types of materials, improve corrosion resistance, coating film adhesion and the like, and further also reduce the impacts on the environment. As this type of zirconium-based chemical conversion treatment, for example, Patent Literature 1 discloses a chemical conversion treatment agent containing: at least one selected from the group consisting of zirconium, titanium, and hafnium; fluorine; and an adhesion and corrosion resistance imparting agent. In addition, Patent Literature 2 discloses a chemical conversion treatment agent containing: at least one selected from the group consisting of zirconium, titanium, and hafnium; fluorine; an adhesion imparting agent; and a chemical conversion reaction accelerator.

As just described, the zirconium-based chemical conversion treatment is excellent in that required amounts of coating film can be formed on various types of materials, corrosion resistance, coating film adhesion and the like can be improved, and the impacts on the environment can be further reduced. However, the approaches in Patent Literatures 1 and 2 have, when the metallic materials are metallic materials including pocket structures, such as car bodies, a problem of difficulty in, even in the case of applying the zirconium-based chemical conversion treatment, achieving high coating throwing power in cationic electrodeposition coating subsequently carried out. In addition, the treatment liquid which can form zirconium-based chemical conversion coating film contains fluoride ions for stabilizing the zirconium, and it is often the case that fluorozirconic acid is used as a supply source for the zirconium, or hydrofluoric acid is added. Furthermore, the fluoride ions are also contained in the treatment liquid for zinc phosphate coating films, and used. This fluoride ion has difficulty with effluent treatment, and can be often insufficiently treated in accordance with neutralizing coagulation and sedimentation treatment which is heavily used in the case of effluent treatment, a dedicated agent has to be also used for eliminating the fluoride ion, and the substance has quite a number of impacts on the environment. As just described, the zirconium-based chemical conversion treatment has a certain degree of level, but the current treatment liquid has disadvantages caused by containing fluoride.

Patent Literature 3 proposes a bismuth coating film which is excellent in coating throwing power, corrosion resistance, and coating film adhesion, and can be produced with a low impact on the environment, but hydrofluoric acid or fluorozirconic acid is added in all of examples.

### Citation List

### Patent Literature

Patent Literature 1: JPA 2004-218073
Patent Literature 2: JPA 2004-218075
Patent Literature 3: WO 2009/145088
Patent Literature 4: JPA 2004-500479

### Summary of Invention

### Technical Problem

An object of the present invention is to provide an agent containing no fluorine, which is equivalent in corrosion resistance of coating film to the zirconium-based chemical conversion coating films proposed in Patent Literatures 1 and 2 and the bismuth-based chemical conversion coating film proposed in Patent Literature 3.

### Solution to Problem

With the object mentioned above, the inventors have achieved the present invention on the basis of the following findings. To explain specifically, first, Patent Literature 3 states that "while the throwing power, corrosion resistance, or coating film adhesion of the electrodeposition coating material is not deteriorated even in the case of adding no brightening agent, corrosion resistance is further improved when a brightening agent is added and an amount of Bi deposition is the same level". The inventors have found out that in Patent Literature 3, due to the presence of a brightening agent, Bi metal crystal may coat the metal surface in a denser fashion, and have crystal sizes somewhat reduced in diameter, when the surface condition is observed with an equivalent amount of Bi deposition and with the difference between the presence and absence of the brightening agent. When attention is focused on this point, the inventors have expected that the densification or reduction in diameter of Bi crystals afford the key to further improve the corrosion resistance of Bi-based coating film. Moreover, Bi is present as crystals, and gaps are thus produced between the crystals. However, the crystals have been believed to have a much fewer gaps, as compared with gaps of zinc phosphate coating films considered as a representative for films under crystalline coating films.

Accordingly, it has been considered that extremely favorable corrosion resistance is achieved when these sites are covered up with other elements. In particular, Group 4 elements such as zirconium are considered to form amorphous films, and be highly effective as barriers against corrosion factors under corrosive environment, and attention has been also focused on properties of the elements.

The inventors have applied another conventional approach, that is, regarding a zinc phosphate coating, the approach of carrying out the treatment of coating a zinc phosphate coating film and thereafter rinsing it with water, followed by covering up the gaps between the crystals with an intercrystalline-covering substance (Patent Literature 4), and also examined a technique of coating the gaps between bismuth crystals with a Group 4 element such as zirconium, thereby improving corrosion resistance. However, this technique is a technique that is unable to be achieved with one treatment liquid, another step is essential (that is, such a coating film is not able to be formed with one liquid), and additionally, the performance of the obtained coating film is not always sufficient.

Therefore, the inventors have reexamined high-performance coating film with one liquid. In this regard, the difficult reason on achieving the technique consists in that it is extremely difficult to adjust the solubility and precipitation equilibrium pH of the film-forming element in an aqueous solution. More specifically, in the case of a treatment liquid with the coexistence of one or more elements in an aqueous solution, a design has to be made so that an intended coating film is deposited by the chemical reaction at the material surface (the treatment liquid can be considered unstable only near the material) while the treatment liquid has a stable state without precipitation.

For example, in Patent Literature 4, for the achievement with one liquid, there is a need to deposit the intercrystalline-covering substance shortly after the deposition of the zinc phosphate film. However, the change in treatment liquid pH at the material interface with a coating film component is often particularly significant during the deposition of chemical conversion coating films, and it is also common that no coating film is formed under the condition that the film-forming element becomes an oxide or a hydroxide.

Bi precipitates in the form of a hydroxide or an oxide at pH on the order of 2 to 3. On the other hand, the Group 4 element such as zirconium precipitates in the form of a hydroxide or an oxide at pH on the order of 3 to 4. Accordingly, there is a need for each element to be complexed for stabilization in an aqueous solution, and further, the sequence of deposition also has to be controlled. Therefore, as for the complexes, when Bi is deposited on a metal base, the Group 4 element such as zirconium is most preferably destabilized and deposited.

The inventors have, as a result of earnest studies in order to achieve this mechanism of action, found that the treatment liquid can be stabilized even substantially in the absence of fluorine in the liquid, with the use of a multimer as a source for the Group 4 element, and with the use of a specific aminopolycarboxylic acid as a stabilizer for the metal, and additionally, that a dense composite coating film mainly containing Bi can be formed with one liquid, and achieved the present invention.

Specifically, the present invention provides a metal surface treatment liquid for use in forming a composite coating film containing a Bi element and a Group 4 element on a metal base, which is an aqueous treatment liquid obtained by adding (A) a Bi element source, (B) a multimer of at least one Group 4 element, examples of which include Zr, Ti, and Hf elements, and (C) one or more aminopolycarboxylic acids or salts thereof. The "multimer of Group 4" refers to a state under which Group 4 substances are bonded to themselves or via oxygen and so on, which is not limited to oxygen, up to a certain size, and refers to a substance having a moderately high molecular weight while being an inorganic compound. In addition, the metal surface treatment liquid may have pH of 3 to 7. Furthermore, in the metal surface treatment liquid, the molar concentration ratio of the Bi element to the Group 4 element may fall within a range that meets 1 < {Bi element + Group 4 element}/Group 4 element ≤ 5. In addition, the aminopolycarboxylic acids or salts thereof may be one or more acids or salts thereof, examples of which include EDTA (ethylenediaminetetraacetic acid), HEDTA (hydroxyethylethylenediaminetriacetic acid), DTPA (diethylene triamine pentaacetic acid), CyDTA (trans-1,2-cyclohexanediaminetetraacetic acid), EGTA (ethylene glycol bis(2-aminoethylether)tetraacetic acid), NTA (nitrilotriacetic acid), and TTHA (triethylenetetraminehexaacetic acid). In addition, the metal treatment liquid may be the liquid to which (D) at least one compound selected from the group consisting of an allylamino compound, an imino compound, an aminopolysaccharide, an aminomodified phenol and derivatives thereof is further added.

Furthermore, the present invention provides a surface treatment method for a metal base, which includes a step of bringing the metal base into contact with the metal surface treatment liquid.

Furthermore, the present invention provides a metal material with a composite coating film formed, the film containing a Bi element and a Group 4 metal element, wherein the composite coating film has a metal Bi content of 30 mg/m² to 600 mg/m² by weight, and a Group 4 element content of 3 mg/m² to 100 mg/m² by weight.

### Advantageous Effects of Invention

The metal surface treatment liquid according to the present invention produces the effect of being able to provide metal bases with high corrosion resistance as in the case of conventional zirconium-based chemical conversion coating films and bismuth-based chemical conversion coating films. Moreover, in the pH range of pH 3 to 7, typically, an etching reaction of materials is slow and a film-forming rate is slow. However, the surface treatment method for metal bases according to the present invention produces the effect of being able to form a composite coating film containing a Bi element and a Group 4 element while having a pH range which is close to neutrality and therefore safe for users and easy to be handled. Now, when the effect of fluoride ions is considered, it is common to enhance the etching reaction, while the effect of removing oxides present at steel surfaces (in particular, iron and aluminum) is also important, and this removal of the oxide film and acid dissolution of metallic inclusion are also believed to increase the etching reaction point and therefore accelerate the chemical reaction (for example, Patent Literature 3). As just described, it is considerably difficult to achieve the object itself of being fluorine-free. However, the present invention can keep sufficient etching force even in the absence of fluorine in the liquid, and thus also produces the effect of being also able to achieve the object of being fluorine-free, which has been difficult. Moreover, the metal base with the composite coating film according to the present invention produces the effect of being very dense, and thus having high corrosion resistance. It is to be noted that while the mechanism of action in the present invention has not been necessarily clear, it is presumed that as a result of using the specific raw materials (preferably, a multimer of a Group 4 element and a specific type of aminopolycarboxylic acid or salt thereof) under the fluorine free condition, it becomes possible to make the metal elements (Bi, Group 4 element) present in a stable fashion in the liquid even at a pH range of pH 3 to 7 which is close to neutrality and therefore can be easily handled, in which the metals are originally unable to be present in a stable fashion, in addition to that, due to that Bi ion, which is more unstable than Group 4 at the same pH, is first deposited on the metal base as Bi metal, the stability of the liquid eliminates, and therefore the Group 4 element also deposits on the metal base in a manner that follows the deposition of the Bi metal.

### Description of Embodiments

An embodiment of the present invention will be described. However, the technical scope of the present invention is not limited to the embodiment. Hereinafter, a metal surface treatment liquid, a method for producing the metal surface treatment liquid, a method for using the metal surface treatment liquid, a composite coating film formed by the method for using, and applications of a metal base with the composite coating film formed, according to the present embodiment will be sequentially described.

### «Metal Surface Treatment Liquid»

The metal surface treatment liquid according to the present embodiment is a fluorine-free aqueous treatment liquid obtained by adding: (A) a Bi element source; (B) a multimer of at least one Group 4 element selected from the group consisting of Zr, Ti and Hf elements; and (C) one or more aminopolycarboxylic acids or salts thereof. Hereinafter, raw materials for use in producing the metal surface treatment liquid, the additive amounts (proportions) of the raw materials, and liquid properties will be sequentially described.

### <Raw Material Component>

Hereinafter, the indispensable raw materials (A) to (C) and a solvent, as well as optional components will be described for the production of the metal surface treatment liquid according to the present embodiment.

### (Indispensable Raw Material A: Bi Element Source)

The Bi element source according to the present embodiment is not particularly limited. Examples of the Bi element source can include, for example, bismuth nitrate, bismuth oxide, bismuth acetate, bismuth hydroxide, and chlorides (halides) such as bismuth trichloride, bismuth trifluoride, and bismuth triiodide. Among these examples, bismuth oxide is most preferred. On the other hand, the chlorides are not preferred (in other words, non-chlorine Bi element sources are preferred).

It is to be noted that the Bi element contained in the metal surface treatment liquid according to the present embodiment is presumed to present as dissolved Bi (water-solubilized Bi). Specifically, under a situation where Bi is not able to be present as Bi ions (Bi³⁺) but becomes a hydroxide or an oxide to thereby precipitate unless the pH is low (less than 3, more specifically 2.6), it is assumed that the dissolved state of Bi is maintained even when the pH is high pH of 3 to 7 (preferably 4 to 6), as a result of the formation of a composite complex by Bi ions, Group 4 ions and a specific aminopolycarboxylic acid as described later. It is to be noted that when the metal surface treatment liquid according to the present embodiment is brought into contact with a metal base, Bi that is present as trivalent ions are believed to develop a redox reaction with the metal base (for example, iron) to be deposited as Bi in the metallic state on the metal base. It is to be noted that the term "dissolved" or "water-solubilized" in this specification refers to, for example, a state without any precipitation visually recognized.

### (Indispensable Raw Material B: Multimer of at least one Group 4 element selected from the group consisting of Zr, Ti and Hf)

At least one Group 4 element selected from the group consisting of Zr, Ti and Hf according to the present embodiment is also technically possible as a monomer, and a multimer is most preferred. As long as it is a substance that meets this condition to come into existence as an acidic treatment liquid, it is not particularly limited. In this case, as the Zr source, cationic or nonionic sources are preferred, which can include, for example, zirconyl acetate, zirconyl nitrate, and zirconyl lactate. In addition, the Ti sources can include, for example, titanium salt compounds of organic acids such as titanium acetate, titanium propionate, titanium lactate, titanium citrate, and titanium tartrate. Furthermore, the Hf sources can include, for example, hafnium acetate and hafnium lactate.

It is to be noted that the at least one Group 4 element selected from the group consisting of Zr, Ti and Hf, which is contained in the metal surface treatment liquid according to the present embodiment, is presumed to be present as a dissolved type as a result of the formation of a composite complex by Bi ions, Group 4 ions and a specific polyaminocarboxylic acid as previously described.

### (Indispensable Raw Material C: Aminopolycarboxylic Acids or Salts thereof)

The aminopolycarboxylic acids or salts thereof according to the present embodiment have one or more selected from the group consisting of, for example, EDTA (ethylenediaminetetraacetic acid), HEDTA (hydroxyethylethylenediaminetriacetic acid), DTPA (diethylene triamine pentaacetic acid), CyDTA (trans-1,2-cyclohexanediaminetetraacetic acid), EGTA (ethylene glycol bis (2-aminoethylether) tetraacetic acid), NTA (nitrilotriacetic acid), and TTHA (triethylenetetraminehexaacetic acid). Among these examples, the EDTA, HEDTA, EGTA, and NTA are more preferred.

### (Indispensable Component: Liquid Medium)

As the liquid medium for use in the metal surface treatment liquid according to the present embodiment, an aqueous medium is preferred, and water is more preferred. It is to be noted that when the liquid medium is water, other aqueous solvents (for example, water-soluble alcohols) other than water may be contained as liquid medium, as long as any component or amount is not added which develops problems with the stability of the system. The other aqueous solvents are preferably, for example, 10% by weight or less on the basis of the total weight of the liquid medium.

### (Other Component)

The metal surface treatment liquid according to the present embodiment (preferred embodiment) contains substantially no fluorine (fluorine-free). The term of fluorine-free herein means containing no fluorine atoms, fluorine ions, or fluorine-containing compounds (excluding unintentional inclusion).

In addition, the metal surface treatment liquid according to the present embodiment preferably further uses, as a preferred raw material D, at least one compound selected from the group consisting of an allylamino compound, an imino compound, an aminopolysaccharide, an aminomodified phenol, and derivatives thereof. The use of the agent with the preferred raw material D added thereto can significantly improve corrosion resistance. These preferred raw materials D will be described below in detail.

First, the allylamino compound is an organic compound that has a structure of a 2-propenyl skeleton (-CH₂-CH=CH₂) with an amino group linked thereto. Examples of the allylamino compound and derivatives thereof include, for example, allylamine, allylamine salts (salts of allylamine and acids), diallylamine, diallylamine salts (salts of diallylamine and acids), polyallylamine, polydiallylamine; and polymerized products thereof. The allylamino compound is not particularly limited in terms of molecular weight, but the weight average molecular weight is preferably 1000 to 5000.

The imino compound is a compound that has a structure (>C=N-R) of a hydrocarbon-substituted secondary carbon atom with a nitrogen atom thereto linked by a double bond. Examples of the imino compound and derivatives thereof include, for example, 2-propane imine, 1,2-ethanediimine, N-methylethaneimine, ethyleneimine, polyethyleneimine, propyleneimine, and polypropyleneimine. The imino compound is not particularly limited in terms of molecular weight, but the weight average molecular weight is desirably 5000 to 100000.

The aminopolysaccharide is an organic compound that has a structure of chain-like coupled monosaccharides having an amino group, which may be a natural product. Specific examples of the aminopolysaccharide and derivatives thereof include, for example, chitin, chitosan, hyaluronic acid, chondroitin sulfuric acid, and streptomycin. The aminopolysaccharide and derivatives thereof are not particularly limited in terms of molecular weight.

The aminomodified phenol is an organic compound that has a structure of an amino-group introduced organic framework having a hydroxyphenyl group (-C₆H₄OH). Specific examples of the aminomodified phenol include, for example, amination products of p-vinylphenol, amination products of bisphenols, amination products of phenolsulfonic acids; polymerized products thereof. The aminomodified phenol and derivatives thereof are not particularly limited in terms of molecular weight.

### <Composition>

The contents of the components (A) to (C) as the indispensable raw materials in the production of the metal surface treatment liquid according to the present embodiment, and the ratios between the respective raw materials will be described below.

### (Amount of Indispensable Raw Material A)

The amount of the indispensable raw material A for use in the production of the metal surface treatment liquid according to the present embodiment is an amount such that the amount of the Bi element is preferably 120 mg/L or more, more preferably 200 mg/L or more on the basis of the total weight of the metal surface treatment liquid. It is to be noted that the upper limit is not particularly limited, but from the viewpoint of economics, for example, an amount such that the amount of the Bi element is 5000 mg/L. In addition, a preferred range is a range such that the amount of the Bi element is 200 to 1800 mg/L.

### (Amount of Indispensable Raw Material B)

The amount of the indispensable raw material B for use in the production of the metal surface treatment liquid according to the present embodiment is not particularly limited, but preferably an amount such that the abundance of the Group 4 element meets the molar ratio described later, in relation to the abundance of the Bi element in the liquid.

### (Amount of Indispensable Raw Material C)

The amount of the indispensable raw material C for use in the production of the metal surface treatment liquid according to the present embodiment is, because a composite complex is presumed to be formed among Bi ions, Group 4 ions and an aminopolycarboxylic acid, preferably an amount such that the aminopolycarboxylic acid not less than a sufficient stoichiometric amount for the formation of the complex is present in the liquid.

### (Amount of Preferred Raw Material D)

In the treatment liquid according to the present embodiment, the total concentration of the compound(s) of the component (D) described above is preferably 10 mg/L or more, more preferably 15 mg/L or more. Further, in the treatment liquid according to the present embodiment, the total concentration of the compound(s) of the component (D) described above is preferably 500 mg/L or less, more preferably 300 mg/L or less.

### (Ratio of Indispensable Raw Material A to Indispensable Raw Material B)

The ratio (molar concentration ratio) of the Bi amount derived from the indispensable raw material A to the Group 4 element derived from the indispensable raw material B in the metal surface treatment liquid according to the present embodiment preferably falls within a range that meets 1 < {Bi Element + Group 4 Element}/Group 4 Element ≤ 5, more preferably a range that meets 1 < {Bi Element + Group 4 Element}/Group 4 Element ≤ 2.

### (Ratio of Indispensable Raw Material A to Indispensable Raw Material C)

As for the indispensable raw material A and indispensable raw material C in the metal treatment liquid according to the present embodiment, the amine included in the structure of the aminopolycarboxylic acid is preferably at least twice as equivalent as to the molar concentration of Bi.

### <Liquid Properties>

Next, liquid properties of the metal surface treatment liquid according to the present embodiment will be described. The liquid herein preferably has pH 3 to 7, more preferably pH 4 to 6, particularly preferably pH 4.5 to 5.5 at the initiation of the reaction. One of technical senses of the present invention is that both the Bi and Group 4 elements are present in a stable fashion in the liquid in this pH range. As for this pH measurement, a commercially available pH meter can be used.

### «Method for Producing Metal Surface Treatment Liquid»

A method for producing the metal surface treatment liquid according to the present embodiment will be described below. The metal surface treatment liquid according to the present embodiment is obtained by, for example, blending the above-described indispensable raw materials A to C (further, optional components, if necessary) into water as a solvent, and adjusting the pH with a dilute aqueous solution of alkali or acid, if necessary.

### «Method for Using Metal Surface Treatment Liquid»

Next, a method for using the metal surface treatment liquid according to the present embodiment will be described. The metal surface treatment liquid according to the present embodiment is used for forming an inorganic film on the surface of a metal base. The applicable metal base and process will be sequentially described below.

### <Applicable Metal Base Material>

The base material to which the metal surface treatment liquid according to the present embodiment is applicable is not particularly limited, but examples thereof include, for example, iron (cold-rolled steel sheets, hot-rolled materials, high tensile strength steels, tool steels, alloy tool steels, spheroidal graphite cast iron, gray cast iron), plating materials, for example, galvanizing materials and aluminizing materials {for example, electrogalvanizing, hot-dip galvanizing, alloying hot-dip galvanizing (for example, aluminum zinc alloy plating), electrolytic zinc alloy plating}, and aluminum materials (1000 series, 2000 series, 3000 series, 4000 series, 5000 series, 6000 series, aluminum castings, aluminum alloy castings, die-cast materials).

### <Process>

The method for using the metal surface treatment liquid according to the present embodiment includes a step of bringing the surface treatment agent according to the present embodiment into contact with a metal base. The step is not particularly limited, but may be an approach that is applied in a normal chemical conversion treatment method, and examples of the step include, for example, spray treatment methods, immersion treatment methods, and flow coating methods. Among these methods, the immersion treatment methods are preferred. The contacting step herein may be a non-conducting method or an electrolytic treatment method. Further, the method for using the liquid may have, for example, in order to degrease the surface of a metal contacted, a well-known cleaning step (for example, alkali cleaning in the case of degreasing, water rinsing in the case of rinsing after a chemical conversion treatment), a drying step after a chemical conversion treatment and the like. In addition, when the metal surface treatment liquid according to the present embodiment is used, a chemical conversion treatment becomes possible in a fairly short amount of time.

In addition, in the case of the electrolytic treatment method, due to the fact that the present invention is fluorine-free, even when the material of a counter electrode (anode) for use in a cathodic electrolysis method is an insoluble anode of a titanium base material coated with iridium oxide or the like, the method is available without accelerating deterioration of the coating. The insoluble anode is, when fluoride ions are present, considered to accelerate deterioration of the coating, and have difficulty with industrial application. The method producing a film by the cathodic electrolysis is not limited as long as the cathodic electrolysis is adopted, but can be also applied to a barrel method. The barrel method refers to a method of filling a basket-shaped container with a small object to be treated, and carrying out cathodic electrolysis while oscillating the filling object to be treated, in contact with an electrode to serve as a cathode in the basket-shaped container.

### <<Composite Coating Film (Chemical Conversion Coating Film)) >>

Next, a composite coating film will be described which is formed on a metal base with a metallic surface-treated film with the use of the metal surface treatment liquid according to the present embodiment. First, the structure and components of the composite coating film will be sequentially described below.

### <Structure of Composite Coating Film>

The metal base with a metallic surface-treated film according to the present embodiment has, on a surface thereof, a composite coating film containing (A) a Bi element and (B) at least one selected from the group consisting of Zr, Ti and Hf elements. In regard to a non-conducting treatment and an electrolytic treatment, mainly, Bi is deposited in the metallic state, whereas the Group 4 element is deposited in the form of an oxide or a hydroxide, not in the metallic state.

### <Components of Composite Coating Film>

### (Content of Component A in Composite Coating Film)

The content of the metal Bi in the composite coating film is preferably 5 mg/m² to 600 mg/m² by weight, more preferably 20 mg/m² to 150 mg/m² by weight, further preferably 40 mg/m² to 100 mg/m² by weight.

### (Content of Component B in Composite Coating Film)

The content of the Group 4 element in the composite coating film is preferably 3 mg/m² to 100 mg/m² by weight, more preferably 3 mg/m² to 40 mg/m² by weight, further preferably 3 mg/m² to 10 mg/m² by weight.

### «Application of Metal Base with Composite Coating Film»

The metal base with the composite coating film according to the present embodiment is useful as a base for coating. The coating approach herein is not particularly limited, but example thereof can include electrodeposition coating, solvent-based coating (for example, roll coating, spray coating), and powder coating (for example, electrostatic powder).

### [Examples]

### <<Preparation of Surface Treatment Agent>>

In accordance with the blend shown in Tables 1 and 2, A and C were mixed as aqueous solutions for Examples 1 to 13 and Comparative Examples 1 to 6, and furthermore, for Examples 1 to 13 and Comparative Examples 3 to 6, B was further added, and well mixed. Then, an adjustment was made to predetermined pH with a dilute ammonia aqueous solution. It is to be noted that A : C refers to the molar ratio of A to C in Tables 1 and 2. It is to be noted that the component D in Example 11 is resin name: polyethyleneimine (from Nippon Shokubai Co., Ltd., Product Name; EPOMIN, Item Number; SP006, Molecular Weight; 600), whereas the component D in Example 12 is resin name: polyethyleneimine (from BASF, Product Name; Lupasol, Item Number; G100, Molecular weight; 5000).

### <<Coating Material>>

In respect to solvent coating material: Classification; solvent coating material, from Tokyo Paint Co., Ltd., Item Number; EPOLAC #100, Preparation of Coating Material and Film-Forming Method; after the adjustment of the viscosity with a dedicated solvent, spraying a coating material component by spray coating, settling for 1 minute, and drying for 5 minutes at 80°C.

In respect to electrodeposition coating material: Classification; cationic electrodeposition coating material, from Kansai Paint Co. , Ltd. , Product Name, GT-100, Coating Film Forming Method; for the adjustment of the film thickness, after understanding the relationship between the film thickness and quantity of electricity through control of the quantity of electricity, figuring out the quantity of electricity for a specified film thickness to obtain a predetermined film thickness. The electrodeposited coating film was subjected to water rinsing with deionized water, and after the temperature of the object to be treated reached 170°C, kept at the temperature for 20 minutes.

### <Test Piece>

Cold-rolled sheet steel sheet (CRS) from PALTEK CORPORATION, alloyed galvanized steel therefrom (zinc coating weight: 45 g/m²), 6000 series aluminum material, and zinc-aluminum 6%-magnesium 3% (Zn-Al-Mg hot-dipped steel sheet, one-side coating weight: 90 g/m2) from Nisshin Steel Co. , Ltd. were used as steels.

### <Process>

For the purpose of removing contamination and oil on the surfaces of the steels, the steels were immersed while oscillation for 2 minutes in an aqueous solution of FINECLEANER L4460 from Nihon Parkerizing Co., Ltd, which was heated to 43 degrees with a heater, to clean the surface. Next, agent components deposited on the steel surfaces was cleaned with water from Hiratsuka City. The steels with the thus cleaned surfaces were used as test pieces, and subjected to surface treatment according to Examples and Comparative Examples. It is to be noted that the cathodic electrolysis method is adopted as the film-forming method in Example 13. For the control of the current and current density with respect to the area in cathodic electrolysis, a current was applied for 60 seconds to the cold-rolled steel sheet of 68.75 cm² at a current value set at 0.04 A (amperes) with a direct-current power supply (ZX-1600H) from Takasago Ltd.

### <Liquid Properties>

The presence or absence of white turbidity was confirmed in a visual manner. The results are shown in Tables 3 and 4.

### <<Film Evaluation>>

### <Analysis of Component>

The intensity was measured for each element with fluorescent X-rays (Scanning X-ray fluorescence spectrometer ZSX Primus II from Rigaku Corporation), and the relation formula of the element intensity with respect to the defined amount was established, and used as a calibration curve to perform quantitative analysis. The results are shown in Tables 3 and 4.

### <Corrosion Resistance Test (Warm Saltwater Test)>

(Test Method) 5 wt% of sodium chloride (JUNSEI CHEMICAL CO., LTD. , Special Grade) was adjusted to pH 7 with hydrochloric acid or sodium hydroxide, and heated to 55 degrees. In advance, an incision was made in the surfaces of the coated sheets with a sharp knife (for example, a commercially available cutter knife) from the surfaces of the coated sheets. This section is referred to as a cut section. These coated sheets were immersed in the previous sodium chloride aqueous solution. After the immersion in this condition for 10 days (240 hours), the sheets were rinsed with water, the water was wiped off, and the operation of attaching a tape to the cut sections and immediately peeling the tape were carried out. In this regard, when the coating film near the cut section was attached firmly to the tape side, and peeled from the steel, the peeled width on both sides from the cut section was measured. The results are shown in Tables 3 and 4.

### <Adhesion Test (Boiling Water Immersion Test)>

(Test Method) In ion-exchanged water heated to boiling, each coated sheet was immersed for 1 hour. After specified time, each coated sheet was taken out of the boiling water, and on reaching room temperature, extruded by 4 mm from the rear surface of the object to be treated with a spherical indenter in an Erichsen extrusion test machine. The operation of attaching a tape to the extruded section and immediately peeling the tape were carried out. In this regard, when the coating film was attached firmly to the tape side, and peeled from the steel, the piece was determined as peeling (X).

[Table 1]

**(Table 1)**

| | A | | | B | | | | (A+B)/B | C | | D | Treatment liquid pH | Treatment liquid temperature (°C) |
|---|---|---|---|---|---|---|---|---|---|---|---|---|---|
| | Raw material A | A conc. (mg/L) | A conc. (mol/L) | Raw material B | B/4 Species | B conc. (mg/L) | B conc. (mol/L) | | Ligand | A:C (A: N) | D conc. (mg/L) | | |
| Example 1 | Nitrate | 300 | 1.44 | Acetate | Zr | 450 | 4.9 | 1.29 | NTA | 1:2 (1:2) | 0 | 5.0 | 28 |
| Example 2 | Nitrate | 300 | 1.44 | Acetate | Zr | 450 | 4.9 | 1.29 | NTA | 1:2 (1:2) | 0 | 4.5 | 28 |
| Example 3 | Nitrate | 150 | 0.72 | Acetate | Zr | 250 | 2.7 | 1.26 | HEDTA | 1:1 (1:2) | 0 | 4.0 | 28 |
| Example 4 | Nitrate | 150 | 0.72 | Acetate | Zr | 300 | 3.3 | 1.22 | NTA | 1:2 (1:2) | 0 | 6.0 | 28 |
| Example 5 | Oxide | 150 | 0.72 | Nitrate | Zr | 300 | 3.3 | 1.22 | EDTA | (1:2) | 0 | 4.0 | 28 |
| Example 6 | Oxide | 900 | 4.31 | Acetate | Zr | 900 | 9.9 | 1.44 | HEDTA | (1:2) | 0 | 5.5 | 35 |
| Example 7 | Oxide | 1200 | 5.74 | Acetate | Zr | 900 | 9.9 | 1.58 | DTPA | 1:1 (1:3) | 0 | 5.0 | 28 |
| Example 8 | Oxide | 300 | 1.44 | Acetate | Zr | 250 | 2.7 | 1.52 | NTA | 1:2 (1:2) | 0 | 4.5 | 28 |
| Example 9 | Acetate | 300 | 1.44 | Lactate | Zr | 250 | 2.7 | 1.52 | NTA | 1:2 (1:2) | 0 | 4.5 | 28 |
| Example 10 | Nitrate | 500 | 2.39 | Acetate | Hf | 120 | 0.7 | 4.56 | HEDTA | 1:1 (1:2) | 0 | 4.0 | 28 |
| Example 11 | Acetate | 1200 | 5.74 | Nitrate | Zr | 360 | 4.0 | 2.45 | DTPA | 1:1 (1:3) | 17 | 5.0 | 37 |
| Example 12 | Oxide | 200 | 0.96 | Acetate | Ti | 1200 | 25.1 | 1.04 | HEDTA | (1:2) | 30 | 4.0 | 40 |
| Example 13 | Oxide | 1200 | 5.74 | Acetate | Zr | 450 | 4.9 | 2.16 | HEDTA | 1:1 (1:2) | 0 | 5.0 | 28 |

[Table 2]

**(Table 2)**

| | A | | | B | | | | (A+B)/B | C | | D | Treatment liquid pH | Treatment liquid Temperature (°C) |
|---|---|---|---|---|---|---|---|---|---|---|---|---|---|
| | Raw material A | A conc. (mg/L) | A conc. (mol/L) | Raw material B | B/4 Species | B conc. (mg/L) | B conc. (mol/L) | | Ligand | A:C (A:N) | D conc. (mg/L) | | |
| Comparative Example 1 | Nitrate | 300 | 1.44 | Not Added | Not Added | Not Added | - | - | NTA | 1:2 (1:2) | 0 | 5.0 | 28 |
| Comparative Example 2 | Nitrate | 200 | 0.96 | Not Added | Not Added | Not Added | - | - | HEDTA | 1:1 (1:2) | 0 | 3.5 | 28 |
| Comparative Example 3 | Nitrate | 200 | 0.96 | Fluoride | Zr | 131 | 1.4 | 1.66 | EDTA | 1:1 (1:2) | 0 | 3.5 | 28 |
| Comparative Example 4 j | Oxide | 1200 | 5.74 | Fluoride | Zr | 900 | 9.9 | 1.58 | NTA | 1:2 (1:2) | 0 | 5.0 | 28 |
| Comparative Example 5 | Oxide | 1200 | 5.74 | Acetate | Zr | 900 | 9.9 | 1.58 | HEDTA | 1:1 (1:2) | 0 | 4.5 | 42 |
| Comparative Example 6 | Acetate | 600 | 2.87 | Carbonate | Zr | 300 | 3.3 | 1.87 | NTA | 1:2 (1:2) | 0 | 4.0 | 28 |
| Comparative Example 7 | Zinc phosphate | | | | | | | | | | | | 43 |
| Comparative Example 8 | Surface conditioner PL-X 2.0 g/L, room temperature, Immersion for 30 seconds | | | | | | | | | | | | 43 |
| Comparative Example 9 | PALBOND L3020, free acidity 0.9 pt, total acidity 23 pt, Promoter AC-131; 3.5 pt, 45°C, Immersion for 2 minutes | | | | | | | | | | | | 43 |

[Table 3]

**(Table 3)**

| | liquid contact time (second) | Determination on treatment Steel formation | Treated steel species | Coating film | | Fluorine : in treatment liquid | Result (Deposition amount) | | | Result (Corrosion resistance of coated sheet) | Result (Adhesion) |
|---|---|---|---|---|---|---|---|---|---|---|---|
| | | | | Coating material film species Thickness | | | A Deposition amount mg/m² | B Deposition amount mg/m² | Remarks | Result of evaluation test on walm saltwater immersion (Maximum peeled width of both sides through tape peeling mm) Cross cut NaCl 5 wt% 55°C Tape peeling after immersion for 240 hours | Immersion in boiling water for 1 hour Grid of 1 mm Tape peeling 100 squares (in the ase of all left 100/100) |
| Example 1 | 30 | ○ | CRS | Solvent coating material | 10 microns | Not containing | 25 | 12 | A Deposition amount/ B Deposition amount = 2.1 Rounding the ratio off to one decimal place) | ⊚(No peeling at cut section) | ○ (Not peeled 100/100) ○(Not peeled 100/100) |
| Example 2 | 60 | ○ | CRS | Electrodeposition coating material | 15 microns | Not containing | 58 | 20 | A Deposition amount/ B Deposition amount = 2.9 (Rounding the ratio off to one decimal place) | ⊚(No peeling at cut section) | ○(Not peeled 100/100) |
| Example 3 | 30 | ○ | GA | Solvent coating material | 14 microns | Not containing | 24 | 6 | A Deposition amount/ B Deposition amount == 4.0 (Rounding the ratio off to one decimal place) | ⊚(No peeling at cut section) | ○ (Not peeled 100/100) |
| Example 4 | 120 | ○ | GA | Electrodeposition coating material | 15 microns | Not containing | 80 | 25 | A Deposition amount/ B Deposition amount = 3.2 (Rounding the ratio off to one decimal place) | ⊚(No peeling at cut section) | ○(Not peeled 100/100) |
| Example 5 | 40 | ○ | AL-6000 Series | Electrodeposition coating material | 15 microns | Not containing | 7 | 5 | A Deposition amount/ B Deposition amount = 1.4 (Rounding the ratio off to one decimal place) | ⊚(No peeling at cut section) | ○ (Not peeled 100/100) |
| Example 6 | 10 | ○ | CRS | Electrodeposition coating material | 10 microns | Not containing | 200 | 22 | A Deposition amount/ B Deposition amount = 9.1 (Rounding the ratio off to one decimal place) | ⊚(No peeling at cut section) | ○(Not peeled 100/100) |
| Example 7 | 30 | ○ | CRS | Electrodeposition coating material | 15 microns | Not containing | 118 | 11 | A Deposition amount/ B Deposition amount = 10.7 (Rounding the ratio off to one decimal place) | ⊚(No peeling at cut section) | ○ (Not peeled 100/100) |
| Example 8 | 30 | ○ | Hot-Dip Zn-Al-Mg Alloy Plating | Electrodeposition coating material | 15 microns | Not containing | 110 | 52 | A Deposition amount/ B Deposition amount = 2.1 (Rounding the ratio off to one decimal place) | ⊚(No peeling at cut section) | ○(Not peeled 100/100) |
| Example 9 | 60 | ○ | GA | Solvent coating material | 14 microns | Not containing | 219 | 75 | A Deposition amount/ B Deposition amount = 2.9 (Rounding the ratio off to one decimal place) | ⊚(No peeling at cut section) | ○ (Not peeled 100/100) |
| Example 10 | 20 | ○ | CRS | Electrodeposition coating material | 15 microns | Not containing | 60 | 7 | A Deposition amount/ B Deposition amount = 8.6 (Rounding the ratio off to ona decimal place) | ⊚(No peeling at cut section) | ○ (Not peeled 100/100) |
| Example 11 | 30 | ○ | CRS | Electrodeposition coating material | 15 microns | Not containing | 150 | 8 | A Deposition amount/ B Deposition amount = 18.75 (Rounding the ratio off to one decimal place) | ⊚(No peeling at cut section) | ○(Not peeled 100/100) |
| Example 12 | 30 | ○ | GA | Electrodeposition coating material | 15 microns | Not containing | 80 | 30 | A Deposition amount B Deposition amount = 2.7 (Rouding the ratio off to one decimal place) | ⊚(No peeling at cut section) | ○ (Not peeled 100/100) |
| Example 13 | 0.55mA/cm2 60 seconds | ○ | CRS | Electrodeposition coating material | 15 microns | Not containing | 120 | 7 | Coating film formation by cathodic electrolysis method A Deposition amount/ B Deposition amount = 17.1 (Rounding the ratio off to one decimal place) | ⊚(No peeling at cut section) | ○ (Not peeled 100/100) |

[Table 4]

**(Table 4)**

| | Liquid contact time (second) | Determination on treatment liquid formation | Treated steel species | Coating film | | Fluorine in treatment liquid | Result (Deposition amount) | | | Result (Corrosion resistance of coated sheet) | Result(Adhesion) |
|---|---|---|---|---|---|---|---|---|---|---|---|
| | | | | Coating material species | Coating film thickness | | A amount mg/m² | B Deposition amount mg/m² | Remarks | Result of evaluation (Maximem peeled through tape peeling mm) Cross cut NaCl 5wt% 55°C Tape peeling after immersion for 240 hours | Immersion in bolling water for 1 hour Grid of 1 mm Tape peeling 100 squares (in the case of all left 100/100) |
| Comparative Example 1 | 60 | ○ | CRS | Electrodeposition coating material | 15 microns | Not containing | 150 | - | Sparse crystal size | ○ (Peeled width 4 mm) | ○ (Not peeled 100/100) |
| Comparative Example 2 | 180 | ○ | CRS | Electrodeposition coating material | 15 microns | Containing 200 ppm of hydrofluoric acid | 120 | - | WO2009/145088 Example 1 Hydrofluoric acid 200 ppm | ⊚(Peeled width 0.8 mm) | ○ (Not peeled 100/100) |
| Comparative Example 3 | 180 | ○ | CRS | Electrodeposition coating material | 15 microns | Containing fluorine derived from fluorozirconic acid | 65 | 3 | WO2009/145088 Example 29 Fluorozirconic acid 300 ppm | ⊚(Peeled width 1.3 mm) | ○ (Not peeled 100/100) |
| Comparative Example 4 | 20 | ○ | CRS | Electrodeposition coating material | 15 microns | Containing fuorine derived rom fluorozirconic acid | 270 | 25 | Crystal size enlarged Exposed metal surface increased Coating film powdered | Not Evaluable | Not Evaluable |
| Comparative Example 5 | 60 | ○ | CRS | Electrodeposition coating material | 10 microns | Not containing | 630 | 12.2 | Level in exess of limit of a deposition amount (Temperature control Deposition amount/B Deposition amount = 51.6 (Rounding the ratio off to one decimal place) | × (Peeled width 13 mm) | × (Entirely peeled 0/100) |
| Comparative Example 6 | Unable to be treated | White turbidity(x) | - | - | - | Not containing | - | - | No coating flim deposited | Not Evaluable | Not Evaluable |
| Comparative Example 7 | 120 | - | CRS | Electrodeposition costing material | 15 microns | Containing (X) | 2000mg/m2 (2.0g/m2) | | Zinc Phosphate crystal size 2000 to 2200 nm | 0(4 mm peeled cut section) | ○(Not peeled) |
| Example 8 | 120 | - | GA | Electrodeposition | 15 microns | Containing (X) | 3000mg/m2 (3.0g/m2) | | Zinc Phosphate crystal size 1500 to 2000 nm | ○(2 mm peeled cut section) | ○(Not peeled) |
| Comparative Example 9 | 120 | - | AL-6000 | Electrodeposition coating material | 15 microns | Containing (X) | 1500mg/m2 (1.5g/m2) | | Zinc Phosphate crystal size 1000 to 1500 nm | ○(1 mm peeled cut section) | ○ (Not peeled) |

| | | | | | | | | | | | |
|---|---|---|---|---|---|---|---|---|---|---|---|
| About Comparative Example 5: Level for evaluating performance of coating film or adhesion by creating film whose deposition amount is purposely over the range of deposition amount according to the present invention. | | | | | | | | | | | |

## Claims

1. A metal surface treatment liquid for use in forming a composite coating film containing a Bi element and a Group 4 element on a metal base, which is a fluorine-free aqueous treatment liquid obtained by adding (A) a Bi element source, (B) a multimer of at least one Group 4 element selected from the group consisting of Zr, Ti and Hf elements, and (C) one or more aminopolycarboxylic acids or salts thereof.

2. The metal surface treatment liquid according to claim 1, wherein the liquid has a pH of 3 to 7.

3. The metal surface treatment liquid according to claim 1 or 2, wherein a molar concentration ratio of the Bi element to the Group 4 element falls within a range that meets 1 < {Bi element + Group 4 element}/Group 4 element ≤ 5.

4. The metal surface treatment liquid according to any one of claims 1 to 3, obtained by further adding (D) at least one compound selected from the group consisting of an allylamino compound, an imino compound, an aminopolysaccharide, an aminomodified phenol and derivatives thereof.

5. A surface treatment method for a metal base, the method comprising a step of bringing the metal base into contact with the metal surface treatment liquid according to any one of claims 1 to 4.

6. A metal base on which a composite coating film containing a Bi element and a Group 4 metal element is formed, wherein the composite coating film has a metal Bi content of 30 mg/m² to 600 mg/m² by weight, and a Group 4 element content of 3 mg/m² to 100 mg/m² by weight.
